# EUROPÄISCHE PATENTSCHRIFT

(11) **EP 1 567 412 B1**
(45) Veröffentlichungstag und Bekanntmachung des Hinweises auf die Patenterteilung: **02.01.2008**
(21) Anmeldenummer: 03779660.4
(22) Anmeldetag: 21.10.2003
(51) Int. Cl.: B64D 11/02

(54) **ANORDNUNG ZUR ERZEUGUNG VON WASSER AN BORD EINES LUFTFAHRZEUGES**
DEVICE FOR PRODUCING WATER ON BOARD OF AN AIRPLANE
DISPOSITIF POUR PRODUIRE DE L'EAU A BORD D'UN AVION

(30) Priorität: 24.10.2002 DE 10249588
(43) Veröffentlichungstag der Anmeldung: 31.08.2005
(73) Patentinhaber: Airbus Deutschland GmbH, 21129 Hamburg (DE)
(72) Erfinder: HOFFJANN, Claus, 21147 Hamburg (DE); HEINRICH, Hans-Jürgen, 22609 Hamburg (DE)
(74) Vertreter: Hansmann, Dierk
(86) Internationale Anmeldenummer: PCT/DE2003/003477
(87) Internationale Veröffentlichungsnummer: WO 2004/040680

(56) Entgegenhaltungen:
- EP-A- 0 634 563
- EP-A- 0 967 676
- US-A- 5 976 332
- US-B1- 6 296 957

## Beschreibung

Die Erfindung betrifft eine Anordnung zur Erzeugung von Wasser an Bord eines Luftfahrzeuges unter Verwendung von einer oder mehreren Brennstoffzellen, wobei eine teilweise oder vollständige Integration einer Wassererzeugungseinheit in Form von einer oder mehreren Hochtemperatur-Brennstoffzellen in einem Flugzeugtriebwerk derart vorgesehen ist, dass Brennkammern des Flugzeugtriebwerkes ganz oder teilweise durch die Hochtemperatur-Brennstoffzellen ersetzt werden und somit der in den Brennkammern herkömmlicher Art stattfindende Prozess ergänzt bzw. ganz abgelöst wird.

Aus der EP 957 026 A2 ist eine Energieversorgungseinheit an Bord eines Luftfahrzeugs zur Substitution eines Haupttriebswerkes, einer Auxiliary Power Unit, einer Ram Air Turbine oder einer NiCd-Batterie bekannt. Eine Brennstoffzelle dient zur Erzeugung von Gleichstrom, wobei zur Luftversorgung der Brennstoffzelle Abluft der Luftfahrzeug-Klimaanlage oder Luftfahrzeugaußenluft eingesetzt wird. Aus der Brennstoffzellenabluft wird Wasser für die Wasserversorgung des Luftfahrzeuges gewonnen, wobei die Brennstoffzellenabluft anschließend an die Luftfahrzeugumgebung abgeführt wird, was auch für den aus der Brennstoffzelle austretenden Wasserstoff gilt. Eine Erzeugung von Wasser erfolgt mittels eines im Flugzeugauslaß angeordneten Kondensators.

In der EP 967 676 A1 ist ein Strahl-Triebwerk beschrieben, welches in die Brennkammern integrierte Brennstoffzellen aufweist. Hierbei sind die Brennstoffzellen an den Brennkammern angeordnet, im Gegensatz zum Gegenstand des aus der Anlage ersichtlichen neuen Hauptanspruches, bei dem die Brennkammern teilweise oder vollständig durch die Hochtemperatur-Brennstoffzelle(n) ersetzt sind. Bei dem vorbekannten Triebwerk wird der Prozeß des Triebwerkes lediglich zum Betrieb der Brennstoffzelle benutzt.

Der Erfindung liegt daher die Aufgabe zugrunde, eine Anordnung der eingangs genannten Art zu schaffen, bei der eine Brennstoffzellen-Gasturbinen-Kombination für den ausschließlichen Betrieb mit Wasserstoff und Luftsauerstoff, als Triebwerk und/oder als Hilfstriebwerk (APU - Auxiliary Power Unit) zur Wasser- und Druckluftversorgung der Kabine sowie zur Stromerzeugung vorgesehen ist.

Die Aufgabe wird durch die Merkmalskombination des Anspruchs 1 gelöst.

Ausgestaltungen der Erfindung sind in den Unteransprüchen 2 bis 20 beschrieben.

Es ist vorgesehen, hierdurch mindestens eine, vorzugsweise jedoch mehrere Brennkammern durch eine oder mehrere Hochtemperatur Brennstoffzellen zu ersetzen. Im Unterschied zu dem genannten Gegenstand bleiben jedoch mindestens eine oder mehrere Brennkammern zur Verbrennung eines Wasserstoff-Luft Gemisches erhalten. Die Brennkammern und Hochtemperatur-Brennstoffzellen werden vorzugsweise abwechselnd ringförmig um die Welle bzw. die Wellen der Gasturbine angeordnet.

Die Brennkammern dienen dem Start der Gasturbine und der Hochtemperatur-Brennstoffzellen sowie einer kurzzeitigen Erhöhung des Luftdurchsatzes der Gasturbine, beispielsweise zum Start eines Luftfahrzeuges. Im Dauerbetrieb wird ausschließlich die thermische Energie der Hochtemperatur-Brenn-stoffzelle für die Erzeugung des Luftdurchsatzes benutzt. Die Wassererzeugung findet anodenseitig, d.h. wasserstoffseitig in der Hochtemperatur-Brennstoffzelle statt. Dieses sogenannte AnodenAbgas besteht bei vollständiger Umsetzung des eingetragenen Wasserstoffs zu 100% aus Wasserdampf (Heißdampf). Dieser Heißdampf wird durch eine Turbine geleitet, wo er durch Expansion abgekühlt wird und damit thermische Energie in Rotationsenergie der Turbinenwelle umgewandelt wird. Diese Rotationsenergie wird in einem Kompressor dazu verwendet, den nötigen wasserstoffseitigen Vordruck für die Hochtemperatur-Brennstoffzelle zu erzeugen.

In einer weiteren Prozessstufe wird der Wasserdampf schließlich auskondensiert. Man erhält reines H₂O, also destilliertes Wasser. Dieses Wasser wird den unterschiedlichen Verbrauchern zugeführt bzw. über eine Aufsalzungseinheit zu Trinkwasser aufbereitet. Anfallendes Grauwasser wird in einen Sammelbehälter aufgefangen, ebenso wie der beim Dehydrieren von Schwarzwasser abgeführte Wasseranteil. Die Wassermengen werden in einem mit der Abwärme des Wasser-Kondensations-prozesses betriebenen Verdampfer verdampft und zusammen mit dem nicht zur Wassergewinnung benötigten Dampfanteil aus dem Anodenabgas der Hochtemperatur-Brennstoffzelle vor der zweiten Turbinenstufe der Gasturbine zugeführt. Luftseitig wird über einen sogenannten Fan Außenluft und/oder Kabinenabluft angesaugt. Dieser Fan wird im Normalbetrieb durch die zweite Turbinenstufe angetrieben, beim Startvorgang durch einen Elektromotor. Die durch den Fan geleitete Luft wird in ei-nem nachgeschalteten Kompressor zunächst vorverdichtet und dann in einem weiteren Kompressor für die Brennkammern und die Luftseite der Hochtemperatur-Brennstoffzelle weiter verdichtet. Die über die Brennkammern bzw. die Hochtemperatur Brennstoffzelle eingetragene thermische Energie treibt dann zunächst die erste Turbinenstufe an und nach der oben beschriebenen Zuführung von Grauwasser in den heißen Abluftstrom die 2. Turbinenstufe. Die Anzahl der Kompressor- und Turbinenstufen sowie die Anzahl der Brennkammern und der Hochtemperatur-Brennstoffzellen lässt sich je nach Anforderung beliebig für unterschiedliche Typen variieren.

Die Vorteile der erfindungsgemäßen Anordnung bestehen in einer
a) Flexibilität gegenüber kurzzeitigen Leistungsanforderungen,
b) hohen Integration der einzelnen Prozessschritte,
c) hohen Reinheit des gewonnenen Wassers,
d) hohen Effizienz des Systems und in einer
e) Gewichtseinsparung.

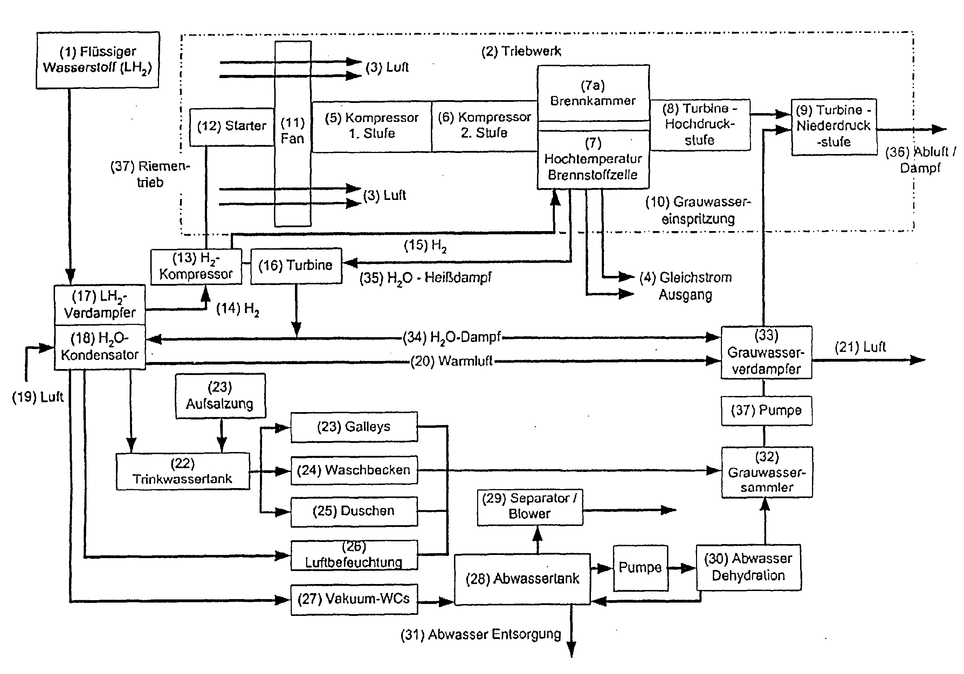

In der Zeichnung ist ein Ausführungsbeispiel nach der Erfindung dargestellt, und zwar zeigt die einzige Figur ein Wassergenerationssystem, welches einen Tank 1 für flüssigen Wasserstoff aufweist. Somit ist eine Anwendung in einem sogenannten "Cryoplane" besonders vorteilhaft. Wie der Zeichnung zu entnehmen ist, ersetzt eine Hochtemperatur-Brennstoffzelle 7 teilweise eine Brennkammer 7a eines Flugzeugtriebwerkes 2. Der Hochtemperatur-Brennstoffzelle 7 werden anodenseitig reiner Wasserstoff und kathodenseitig Luft zugeführt, während der Brennkammer 7a ein Gemisch aus Wasserstoff und Luft zugeführt wird. Hierbei ist mindestens die Wasserstoffzufuhr regulierbar oder vollständig abschaltbar ausgeführt. Der Hochtemperatur-Brennstoffzelle 7 ist anodenseitig mindestens eine ein- oder mehrstufige Turbine 16 nachgeschaltet ist, die thermische Energie des Anodenabgases 35 in Rotationsenergie umwandelt. Es können Brennstoffzellen vom Typ Oxidkeramik-Brennstoffzelle (SOFC - Solid Oxide Fuel Cell) oder Schmelzkarbonat-Brennstoffzelle (MCFC - Molten Carbonate Fuel Cell) oder von einem in Leistung und Temperaturniveau vergleichbaren Typ verwendet werden.

Der Hochtemperatur-Brennstoffzelle 7 ist ein Kondensationsprozess 18 nachgeschaltet, der Wasser aus einem Teil des Anodenabgases 35 der Brennstoffzelle 7 auskondensiert. Weiterhin kann die Hochtemperatur-Brennstoffzelle 7 beidseitig auf der Luft- bzw. Sauerstoffseite einerseits und auf der Brennstoff- bzw. Wasserstoffseite andererseits mit Druck beaufschlagt werden, wobei gleiche oder auch unterschiedliche Drücke anodenseitig und kathodenseitig zulässig sind. Die Verwendung von flüssigem oder gasförmigem Wasserstoff ist möglich. Flüssiger Wasserstoff 1 kann vor dem Eintritt in die Hochtemperatur-Brennstoffzelle 7 oder Brennkammer 7a verdampft werden, wobei der Verdampfer 17 mit der Prozesswärme des Anodenabgas-Kondensators 18 betrieben werden kann. Eine besondere Ausführung der erfinderischen Anordnung liegt darin, dass der Verdampfer 17 ringförmig um den Kondensator 18 oder kreisförmig innerhalb des Kondensators 18 angeordnet und als Rohrbündel-Wärmetauscher ausgeführt ist. Auch hierbei kann mindestens ein Teil des Kondensationsprozesses 18 mit Kühlluft 19 betrieben werden.

Es ist möglich, gebrauchtes Wasser wie auch nicht benötigtes Kondensat in einem Behälter 32 zu sammeln. Die im Kondensationsprozess 18 erwärmte Luft 20 wird vorteilhafterweise zum Verdampfen des Grauwassers in einem gesonderten Behälter 33 benutzt, in welchen das Grauwasser mittels
einer Pumpe 37 befördert wird, wobei ein Filter zur Zurückhaltung von Fest- und Schwebstoffen aus dem Grauwasser vorgesehen ist. Dem Kondensationsprozess 18 wird Wasser in destillierter Qualität entnommen und derart verteilt, und dass die Galleys 23, die Handwaschbecken 24 und die Duschen 25 mit einem durch die Zudosierung von Salz 23 generierten Trinkwasser 22 sowie die WCs 27 und die Luftbefeuchtung 26 mit destilliertem Wasser versorgt werden Die Turbinenstufen 8, 9 können sowohl die Kompressorstufen 5, 6 als auch den Fan 11 betreiben, wobei die Kompressorstufen 5, 6 sowohl die Hochtemperatur-Brennstoffzelle 7 als auch die Brennkammer 7a luftseitig mit Druck beaufschlagen. Der Luftdurchsatz 3 des Fans 11 kann entweder bei einem Triebwerk zum Vortrieb oder bei einer APU zur Druckbeaufschlagung der Druckluftsysteme und/oder der Klimaanlage verwendet werden. Hierzu sind jeweils ein Fan 11 mit einer ersten Kompressorstufe 5 und zweiten Turbinenstufe 9 sowie einer zweiten Kompressorstufe 6 und ersten Turbinenstufe 8 miteinander gekoppelt und laufen auf koaxialen Wellen ineinander mit unterschiedlichen Drehzahlen. Die Anzahl der ineinander laufenden koaxialen Wellen ist beliebig ausgeführt.

Das Abwasser wird in einem Sammeltank 28 gesammelt wird, ganz oder teilweise dehydriert 30 und der so gewonnene Wasseranteil wird dem Grauwasser-Sammeltank 32 zugeführt. Von besonderem Vorteil ist,
- dass die Anordnung auch ohne Abgabe von Wasser an ein Wassersystem betrieben werden kann,
- dass sowohl die Brennkammern, wie auch die Hochtemperatur-Brennstoffzellen separat betrieben werden können, auch in beliebigen Kombinationen miteinander, und
- dass bei separatem Betrieb von Brennkammern oder Hochtemperatur-Brennstoffzellen 7 einzelne Brennkammern oder Hochtemperatur-Brennstoffzellen abgeschaltet werden können.

## Patentansprüche

1. Anordnung zur Erzeugung von Wasser an Bord eines Luftfahrzeuges mittels einer oder mehreren Brennstoffzellen, wobei die Anordnung aufweist:
eine oder mehrere Hochtemperatur-Brennstoffzellen (7);
ein Triebwerk (2) mit einem Kompressor (5,6), Brennkammern (7a) und einer ein- oder mehrstufigen Turbine (8, 9);
wobei eine oder mehrere Hochtemperatur-Brennstoffzellen (7) zwischen dem Kompressor (5,6) und der ein- oder mehrstufigen Turbine (8, 9) integriert sind, so dass die Brennkammern (7a) des Triebwerkes (2) zumindest teilweise durch die eine oder mehreren Hochtemperatur-Brennstoffzellen (7) ersetzt sind und der in den Brennkammern (7a) stattfindende Prozess zumindest ergänzbar ist, **dadurch gekennzeichnet,**
**dass** die Brennkammern (7a) und die eine oder mehrere Hochtemperatur-Brennstoffzellen (7) eine Wasserstoffzufuhr (15) aufweisen;
**dass** die eine oder mehrere Hochtemperatur-Brennstoffzellen (7) als Typ Oxidkeramik-Brennstoffzelle (SOFC - Solid Oxide Fuel Cell) oder Schmelzkarbonat-Brennstoffzelle (MCFC - Molten Carbonate Fuel Cell) ausgeführt sind oder einem in Leistung und Temperaturniveau vergleichbaren Typ angehören;
**dass** den einen oder mehreren Hochtemperatur-Brennstoffzellen (7) anodenseitig mittels der Wasserstoffzufuhr (15) reiner Wasserstoff zuführbar ist;
**dass** den Hochtemperatur-Brennstoffzellen (7) kathodenseitig Luft (3) aus dem Kompressor (5, 6) zuführbar ist;
**dass** die eine oder mehrere Hochtemperatur-Brennstoffzellen (7) eingerichtet sind, anodenseitig Anodenabgas (35) bereitzustellen;
**dass** den Brennkammern (7a) Luft (3) aus dem Kompressor (5, 6) und mittels der Wasserstoffzufuhr (15) Wasserstoff (15) zuführbar sind;
**dass** die Wasserstoffzufuhr (15) regulierbar oder vollständig abschaltbar ausgeführt ist;
**dass** der Hochtemperatur-Brennstoffzelle (7) anodenseitig mindestens eine weitere ein- oder mehrstufige Turbine (16) nachgeschaltet ist, so dass die thermische Energie des Anodenabgases (35) in Rotationsenergie umwandelbar ist; und
**dass** dieser weiteren ein- oder mehrstufigen Turbine (16) ein Kondensator (18) nachgeschaltet ist, so dass Wasser aus einem Teil des Anodenabgases der Hochtemperatur-Brennstoffzelle (7) auskondensierbar ist.

2. Anordnung nach Anspruch 1, **dadurch gekennzeichnet, dass** die Umwandlung der thermischen Energie durch eine oder mehrere Kombinationen unterschiedlicher Wärmekraftmaschinen, insbesondere durch eine Kombination der weiteren Turbine (16) und einem Stirling Motor erfolgt.

3. Anordnung nach Anspruch 1 oder 2, **dadurch gekennzeichnet, dass** die gewonnene mechanische Energie einem Kompressor (13) zugeführt wird.

4. Anordnung nach einem der Ansprüche 1 bis 3, **dadurch gekennzeichnet, dass** der Kompressor (13) zur Druckbeaufschlagung der Anodenseite mit Wasserstoff (15) verwendet wird.

5. Anordnung nach einem der Ansprüche 1 bis 4, **dadurch gekennzeichnet, dass** die Hochtemperatur- Brennstoffzellen (7) beidseitig auf der Luft- bzw. Sauerstoffseite einerseits und auf der Brennstoff- bzw. Wasserstoffseite andererseits mit Druck beaufschlagbar ausgeführt sind, wobei gleiche oder auch unterschiedliche Drücke anodenseitig und kathodenseitig zulässig sind.

6. Anordnung nach einem der Ansprüche 1 bis 5, **dadurch gekennzeichnet, dass** die Wasserstoffzufuhr (15) eingerichtet ist, flüssigen oder gasförmigen Wasserstoff bereitzustellen.

7. Anordnung nach einem der Ansprüche 1 bis 6, ferner aufweisend
einen Verdampfer (17);
wobei der Verdampfer (17) eingerichtet ist, flüssigen Wasserstoff (1) vor dem Eintritt in die eine oder mehrere Hochtemperatur-Brennstoffzellen (7) oder den Brennkammern (7a) zu verdampfen.

8. Anordnung nach Anspruch 7, **dadurch gekennzeichnet, dass** der Verdampfer (17) mit der Prozesswärme des Kondensators (18) betreibbar ausgeführt ist.

9. Anordnung nach Anspruch 7 oder 8, **dadurch gekennzeichnet, dass** der Verdampfer (17) ringförmig um den Kondensator (18) oder kreisförmig innerhalb des Kondensators (18) angeordnet und als Rohrbündel-Wärmetauscher ausgeführt ist.

10. Anordnung nach einem der Ansprüche 1 bis 9, **dadurch gekennzeichnet, dass** dem Kondensator (18) Kühlluft (19) bereitstellbar ist.

11. Anordnung nach einem der Ansprüche 1 bis 10, ferner aufweisend
einen Grauwassersammler (32);
wobei dem Grauwassersammler (32) gebrauchtes Wasser und Kondensat des Kondensators (18) zuführbar sind.

12. Anordnung nach Anspruch 11, ferner aufweisend ein Grauwasserverdampfer (33), eine Pumpe (37) und einen Filter;
wobei das Grauwasser aus dem Grauwassersammler (32) mittels der Pumpe (37) in den Grauwasserverdampfer (33) beförderbar ist; und
wobei der Filter eingerichtet ist, Fest- und Schwebstoffen aus dem Grauwasser zurückzuhalten;
wobei der Grauwasserverdampfer (33) eingerichtet ist, eine im Kondensator (18) erwärmte Warmluft (20) zum Verdampfen von Grauwasser in dem Grauwasserverdampfer (33) zu benutzen.

13. Anordnung nach einem der Ansprüche 1 bis 12,
wobei die Turbine (8,9) eine Niederdruckstufe (9) und eine Hochdruckstufe (8) aufweist;
wobei das Anodenabgas (35) vor der Niederdruckstufe (9) einblasbar ist und dort mit einer Kathodenabluft aus der einen oder mehreren Hochtemperatur-Brennstoffzellen (7) vermischbar ist.

14. Anordnung nach einem der Ansprüche 1 bis 13, **dadurch gekennzeichnet, dass** mittels der thermischen Energie des Anodenabgases (35) Keime und Mikroorganismen aus dem Grauwasser (32) thermisch abtötbar sind.

15. Anordnung nach einem der Ansprüche 1 bis 14, **dadurch gekennzeichnet, dass** dem Kondensator (18) Wasser in destillierter Qualität entnommen und verteilt wird, und dass Galleys (23), Handwaschbecken (24) und Duschen (25) mit einem durch Zudosierung von Salz (23) generierten Trinkwasser (22) sowie die WCs (27) und die Luftbefeuchtung (26) mit destilliertem Wasser versorgbar sind.

16. Anordnung nach einem der Ansprüche 1 bis 15, **dadurch gekennzeichnet, dass** die Turbinenstufen (8, 9) sowohl die Kompressorstufen (5, 6) als auch den Fan (11) betreiben, und dass die Kompressorstufen (5, 6) sowohl die Hochtemperatur-Brennstoffzellen (7) als auch die Brennkammern (7a) luftseitig mit Druck beaufschlagen.

17. Anordnung nach einem der Ansprüche 1 bis 16, wobei das Triebwerk (2) einen Fan (11) aufweist; wobei die Luft (3) mittels des Fans (11) komprimierbar ist; wobei die komprimierte Luft (3) bei dem Triebwerk (2) zum Vortrieb oder bei einer APU zur Druckbeaufschlagung der Druckluftsysteme und/oder der Klimaanlage verwendet wird.

18. Anordnung nach Anspruch 17, **dadurch gekennzeichnet, dass** jeweils Fan (11) mit 1. Kompressorstufe (5) und 2. Turbinenstufe (9) sowie 2. Kompressorstufe (6) und 1. Turbinenstufe (8) miteinander gekoppelt sind und auf koaxialen Wellen ineinander mit unterschiedlichen Drehzahlen laufen.

19. Anordnung nach einem der Ansprüche 11 bis 18, ferner aufweisend einen Abwassertank (28);
wobei in dem Abwassertank (28) Abwasser sammelbar ist, ganz oder teilweise dehydrierbar ist und der so gewonnene Wasseranteil dem Grauwassersammler (32) zugeführt wird.

20. Anordnung nach einem der Ansprüche 1 bis 19, **dadurch gekennzeichnet, dass** die Brennkammern (7a) oder die eine oder mehrere Hochtemperatur-Brennstoffzellen (7) abschaltbar sind.

## Claims

1. Arrangement for generating water on board an aircraft by means of one or a plurality of fuel cell(s), wherein the arrangement comprises:
one or a plurality of high-temperature fuel cell(s) (7) ;
a power unit (2) with a compressor (5, 6), combustion chambers (7a) and a single- or multi-stage turbine (8, 9);
wherein one or a plurality of high-temperature fuel cell(s) (7) is/are integrated between the compressor (5, 6) and the single- or multi-stage turbine (8, 9), so that the combustion chambers (7a) of the power unit (2) are at least partly replaced by the one or a plurality of high-temperature fuel cell(s) (7) and the process taking place in the combustion chambers (7a) can be at least supplemented, **characterised in**
**that** the combustion chambers (7a) and the one or plurality of high-temperature fuel cell(s) (7) comprise a hydrogen supply (15);
**that** the one or plurality of high-temperature fuel cell(s) (7) is/are formed as the SOFC - Solid Oxide Fuel Cell - or MCFC - Molten Carbonate Fuel Cell - type or belong(s) to a type which is comparable in output and temperature level;
**that** the one or plurality of high-temperature fuel cell(s) (7) can be supplied with pure hydrogen on the anode side by means of the hydrogen supply (15);
**that** the high-temperature fuel cells (7) can be supplied with air (3) from the compressor (5, 6) on the cathode side;
**that** the one or plurality of high-temperature fuel cell(s) (7) is/are adapted to provide anode exhaust gas (35) on the anode side;
**that** the combustion chambers (7a) can be supplied with air (3) from the compressor (5, 6) and hydrogen (15) by means of the hydrogen supply (15);
**that** the hydrogen supply (15) is formed such that it can be regulated or completely cut off;
**that** at least one further single- or multi-stage turbine (16) is connected downstream of the high-temperature fuel cell (7) on the anode side, so that the thermal energy of the anode exhaust gas (35) can be converted into rotational energy; and
**that** a condenser (18) is connected downstream of this further single- or multi-stage turbine (16), so that water can condense out of some of the anode exhaust gas of the high-temperature fuel cell (7).

2. Arrangement according to Claim 1, **characterised in that** the thermal energy is converted by one or a plurality of combination(s) of different thermal engines, in particular by a combination of the further turbine (16) and a Stirling engine.

3. Arrangement according to Claim 1 or 2, **characterised in that** the mechanical energy which is obtained is supplied to a compressor (13).

4. Arrangement according to any one of Claims 1 to 3, **characterised in that** the compressor (13) is used to pressurise the anode side with hydrogen (15).

5. Arrangement according to any one of Claims 1 to 4, **characterised in that** the high-pressure fuel cells (7) can be pressurised on both sides on the air or oxygen side on the one hand and on the fuel or hydrogen side on the other, wherein the same or different pressures on the anode side and cathode side are permissible.

6. Arrangement according to any one of Claims 1 to 5, **characterised in that** the hydrogen supply (15) is adapted to provide liquid or gaseous hydrogen.

7. Arrangement according to any one of Claims 1 to 6, further comprising
an evaporator (17);
wherein the evaporator (17) is adapted to evaporate liquid hydrogen (1) before it enters the one or plurality of high-temperature fuel cell(s) (7) or the combustion chambers (7a).

8. Arrangement according to Claim 7, **characterised in that** the evaporator (17) is formed such that it can be operated with the process heat of the condenser (18).

9. Arrangement according to Claim 7 or 8, **characterised in that** the evaporator (17) is disposed in an annular manner around the condenser (18) or in a circular manner inside the condenser (18) and is formed as a shell-and-tube heat exchanger.

10. Arrangement according to any one of Claims 1 to 9, **characterised in that** the condenser (18) can be provided with cooling air (19).

11. Arrangement according to any one of Claims 1 to 10, further comprising
a grey water collector (32);
wherein used water and condensate of the condenser (18) can be supplied to the grey water collector (32).

12. Arrangement according to Claim 11, further comprising a grey water evaporator (33), a pump (37) and a filter;
wherein the grey water can be conveyed out of the grey water collector (32) by means of the pump (37) into the grey water evaporator (33); and
wherein the filter is adapted to retain solid and suspended matter from the grey water;
wherein the grey water evaporator (33) is adapted to use hot air (20) which is heated in the condenser (18) to evaporate grey water in the grey water evaporator (33).

13. Arrangement according to any one of Claims 1 to 12,
wherein the turbine (8, 9) comprises a low-pressure stage (9) and a high-pressure stage (8);
wherein the anode exhaust gas (35) can be blown in before the low-pressure stage (9) and mixed here with cathode exhaust air from the one or plurality of high-temperature fuel cell(s) (7).

14. Arrangement according to any one of Claims 1 to 13, **characterised in that** germs and microorganisms from the grey water (32) can be thermally killed by means of the thermal energy of the anode exhaust gas (35).

15. Arrangement according to any one of Claims 1 to 14, **characterised in that** water of a distilled quality is taken from the condenser (18) and distributed, and that galleys (23), hand wash basins (24) and showers (25) can be supplied with drinking water (22) generated by a metered addition of salt (23) and the WCs and the air humidification system (26) can be supplied with distilled water.

16. Arrangement according to any one of Claims 1 to 15, **characterised in that** the turbine stages (8, 9) operate both the compressor stages (5, 6) and the fan (11), and that the compressor stages (5, 6) pressurise both the high-temperature fuel cells (7) and the combustion chambers (7a) on the air side.

17. Arrangement according to any one of Claims 1 to 16,
wherein the power unit (2) comprises a fan (11); wherein the air (3) can be compressed by means of the fan (11);
wherein the compressed air (3) is used in the power unit (2) for drive and in an APU for pressurising the compressed-air systems and/or the air conditioning system.

18. Arrangement according to Claim 17, **characterised in that** a respective fan (11) with a 1^{st} compressor stage (5) and a second turbine stage (9) as well as a 2^{nd} compressor stage (6) and a 1^{st} compressor stage (8) are coupled together and run into one another on coaxial shafts at different rotational speeds.

19. Arrangement according to any one of Claims 11 to 18, further comprising a waste water tank (28);
wherein waste water can be collected in the waste water tank (28) and be completely or partly dehydrogenated, and the water component thus obtained is supplied to the grey water collector (32).

20. Arrangement according to any one of Claims 1 to 19, **characterised in that** the combustion chambers (7a) or the one or plurality of high-temperature fuel cells (7) can be cut off.

## Revendications

1. Dispositif pour produire de l'eau à bord d'un avion au moyen d'une ou plusieurs cellules à combustible, ce dispositif comprenant
une ou plusieurs cellules électrochimiques (7) à haute température ;
un groupe d'entraînement (2) comprenant un compresseur (5, 6), des chambres de combustion (7a) et une turbine (8, 9) à un ou plusieurs étages ;
étant précisé que la ou les cellules électrochimiques à haute température (7) sont intégrées entre le compresseur (5, 6) et la turbine (8, 9) à un ou plusieurs étages, de sorte que les chambres de combustion (7a) du groupe d'entraînement (2) sont remplacées au moins partiellement par la ou les cellules électrochimiques à haute température (7) et que le processus qui a lieu dans les chambres de combustion (7a) peut être au moins complété,
ce dispositif présentant les caractéristiques suivantes :
- les chambres de combustion (7a) et la ou les cellules électrochimiques à haute température (7) présentent une amenée d'hydrogène (15),
- le ou les cellules électrochimiques à haute température (7) sont du type à céramique/oxydée (SOFC : solid oxyde fuel cell) ou à carbonate fondu (MCFC : molten carbonate fuel cell) ou sont d'un autre type comparable en puissance et en niveau de température,
- de l'hydrogène pur peut être amené par l'amenée d'hydrogène (15) à la ou aux cellules électrochimiques à haute température (7) du côté de l'anode,
- de l'air provenant du compresseur (5, 6) peut être amené à la ou aux cellules électrochimiques à haute température, du côté de la cathode,
- la ou les cellules électrochimiques à haute température (7) sont conçues pour délivrer du côté de l'anode, du gaz de sortie d'anode (35),
- aux chambres à combustion (7a) peuvent être amenés de l'air (3) provenant du compresseur (5, 6) et de l'hydrogène par l'amenée d'hydrogène (15),
- l'amenée d'hydrogène (15) peut être régulée ou totalement coupée,
- en aval de la cellule électrochimique à haute température (7) peut être raccordée à celle-ci du côté de l'anode, au moins une autre turbine (16) à un ou plusieurs étages (16) de sorte que l'énergie des gaz de sortie d'anode (35) peut être transformé en énergie de rotation,
- à cette autre turbine (16) à un ou plusieurs étages est raccordé en aval un condenseur (18) de manière à pouvoir condenser l'eau d'une partie du gaz de sortie d'anode de la cellule électrochimique à haute température (7).

2. Dispositif selon la revendication 1, **caractérisé en ce que** la transformation de l'énergie thermique a lieu au moyen d'une ou plusieurs combinaisons de diverses machines thermiques, notamment en combinant l'autre turbine (16) et un moteur Stirling.

3. Dispositif selon la revendication 1 ou 2, **caractérisé en ce que** l'énergie mécanique gagnée est envoyée à un compresseur (13).

4. Dispositif selon une des revendications 1 à 3, **caractérisé en ce que** le compresseur (13) est utilisé pour faire agir en pression sur le côté de l'anode, de l'hydrogène (15).

5. Dispositif selon une des revendications 1 à 4, **caractérisé en ce que** les cellules électrochimiques à haute température (7) sont conçues pour pouvoir être actionnées en pression des deux côtés, c'est-à-dire du côté de l'air ou de l'oxygène d'une part et du côté du carburant ou de l'hydrogène d'autre part, des pressions égales ou même différentes étant admises du côté anode et du côté cathode.

6. Dispositif selon une des revendications 1 à 5, **caractérisé en ce que** l'amenée d'hydrogène (15) est conçue pour mettre à disposition de l'hydrogène liquide ou gazeux.

7. Dispositif selon une des revendications 1 à 5, qui comporte de plus un évaporateur (17) pour vaporiser de l'hydrogène liquide (1) avant son entrée dans le ou les cellules électrochimiques à haute température (7) ou dans les chambres à combustion (7a).

8. Dispositif selon la revendication 7, **caractérisé en ce que** l'évaporateur (17) peut être entraîné par la chaleur provenant du condenseur (18).

9. Dispositif selon la revendication 7 ou 8, **caractérisé en ce que** l'évaporateur (17) est disposé en anneau autour du condenseur (18) ou un cercle à l'intérieur de celui-ci et est constitué par un échangeur thermique à faisceau tubulaire.

10. Dispositif selon une des revendications 1 à 9, **caractérisé en ce que** de l'air frais (19) peut être mis à disposition du condenseur (18).

11. Dispositif selon une des revendications 1 à 10, comportant de plus un collecteur d'eau usée (32) auquel peut être amenée l'eau usée et le condensat du condenseur (18).

12. Dispositif selon la revendication 11, comportant de plus un évaporateur d'eau usée (33), une pompe (37) et un filtre et dans lequel
l'eau usée provenant du collecteur d'eau usée (32) peut être envoyée par la pompe (37) à l'évaporateur d'eau usée (33),
le filtre est conçu pour retenir les matières solides et les suspensions provenant de l'eau usée,
l'évaporateur d'eau usée (33) est conçu pour utiliser de l'air (20) qui a été échauffé dans le condenseur (18) pour produire l'évaporation dans l'évaporateur d'eau usée (33).

13. Dispositif selon une des revendications 1 à 12, dans lequel
la turbine (8, 9) présente un étage basse pression (9) et un étage haute pression (8),
le gaz de sortie d'anode (35) peut être insufflé en amont de l'étage basse pression (9) et être mélangé en cet endroit à de l'air de sortie de cathode provenant de la ou des cellules électrochimiques à haute température (7).

14. Dispositif selon une des revendications 1 à 10, **caractérisé en ce que** l'énergie thermique du gaz de sortie d'anode (35) peut détruire les germes et les microorganismes provenant de l'eau usée (32).

15. Dispositif selon une des revendications 1 à 14, **caractérisé en ce que** de l'eau ayant la qualité d'une eau distillée peut être retirée du condenseur (18) et distribuée, des éviers (23), des lavabos (24) et des douches (25) pouvant être alimentés en eau potable (22) obtenue par dosage de sel (23), les WC et l'humidificateur d'air (26) pouvant être alimentés en au distillée.

16. Dispositif selon une des revendications 1 à 15, **caractérisé en ce que** les étages de turbine (8, 9) entraînent les étages de compresseur (5, 6) et également le ventilateur (11), tandis que les étages de compresseur (5, 6) soumettent à pression les cellules électrochimiques à haute température (7) ainsi que les chambres à combustion (7a) du côté air.

17. Dispositif selon une des revendications 1 à 16, **caractérisé en ce que** le groupe d'entraînement (2) comprend un ventilateur (11) qui peut comprimer de l'air, et cet air comprimé est utilisé dans le groupe d'entraînement (2) pour la propulsion ou dans un APU (auxiliary power unit), pour mettre en pression les systèmes d'air comprimé et/ou l'installation de climatisation..

18. Dispositif selon la revendication 17, **caractérisé en ce que** le ventilateur est accouplé avec le premier étage de compresseur (5) et le deuxième étage de turbine (9) ou avec le second étage de compresseur (6) et le premier étage de turbine (8), en tournant les uns dans les autres sur des axes coaxiaux à des vitesses différentes.

19. Dispositif selon une des revendications 1 à 18, qui comporte de plus un réservoir d'eau usée (28) dans lequel l'eau usée est collectée, puis deshydrogénée en tout ou en partie et la fraction d'eau ainsi obtenue est envoyée au collecteur d'eau usée (32).

20. Dispositif selon une des revendications 1 à 19, **caractérisé en ce que** la chambre de combustion (7a) ou la ou les cellules électrochimiques à haute température (7) peuvent être déconnectées.
